# EUROPEAN PATENT SPECIFICATION

(11) **EP 0 703 876 B1**
(45) Date of publication and mention of the grant of the patent: **13.05.1998**
(21) Application number: 94917021.1
(22) Date of filing: 14.06.1994
(51) Int. Cl.: C02F 11/12, C02F 11/16, B01D 29/27

(54) **A METHOD AND APPARATUS FOR DRYING SLUDGES**
METHODE UND VORRICHTUNG ZUM TROCKNEN VON SCHLÄMMEN
INSTALLATION ET METHODE D'ASSECHEMENT DES BOUES RESIDUAIRES

(30) Priority: 16.06.1993 FI 932756
(43) Date of publication of application: 03.04.1996
(73) Proprietor: KOHVAKKA, Timo, 41400 Lievestuore (FI); KAUNISMAA, Pekka, 40320 Jyväskylä (FI)
(72) Inventor: KOHVAKKA, Timo, 41400 Lievestuore (FI); KAUNISMAA, Pekka, 40320 Jyväskylä (FI)
(74) Representative: Solf, Alexander, Dr.
(86) International application number: FI9400254
(87) International publication number: WO9429230

(56) References cited:
- EP-A- 0 067 795
- EP-A- 0 267 636
- EP-A- 0 509 468
- AU-B- 595 041
- PATENT ABSTRACTS OF JAPAN, Vol. 14, No. 412, C-755; & JP,A,2 157 099 (MAMIKO ENDOU), 15 June 1990.

## Description

The object of the invention is a method and apparatus for drying sludges, in which the sludge is first of all poured into a mass filter in which it is permitted to precipitate into a stiff sludge, which is collected for final drying. The invention is also concerned with an apparatus for implementing the method. In industry, weak sludges with a heavy-metal content are created among other things and in a factory environment these are dealt with as follows. The weak sludge has been led to a mass platform filter, in which it has been permitted to precipitate for a few days. After this, the sludge, which is still in quite a liquid form, has been transported as such to a further treatment plant. Sludge forms in the water purification process of an industrial plant. The reject liquid obtained from the mass filter is led back to the purification process.

Here a mass filter generally means a sand-based filter, in which it is possible to use such additives as active carbon, peat, hydro-anthracite, and ion-exchange resins.

Because only the gross weight of the waste is significant in waste treatment, it would be advantageous to be able to dry the despatched waste sludge to as great a solids-content as possible.

A method intended for the treatment of sludge, in which the sludges are confined against the ground by means of suitable edges, is known from GB publication 2193716. When the sludge has been fully dried, the next layer can be set on top of it, with a slightly smaller diameter. A method of this kind, however, presupposes that the sludge can be well dried, which most industrial sludges cannot be. European patent publication number 0 067 795 presents a sludge treatment process, in which the sludge is poured into filter bags set in a ring form. Especially with weak sludges the same bag is filled several times in order to obtain even a reasonable degree of filling. Repetition of this kind requires special automation. The bag material in this must be extremely dense, so that the sludge does not ooze out in the initial phase. The size of the bag, for example, is only 75 litres. TYPAR^{R} fabric, which is mentioned as the bag material, is available is several different qualities. It is quite clear that here it is not possible to use the coarser available TYPAR fabrics, for example the nominal weights of 68, 110, or 136 g/m², through which many sludge masses would ooze. It is probable that what is intended is the densest version, which has a nominal weight of 240 g/m². It is true that if the size of the charge is reduced, the water penetrability of the bag can be increased to some extent. In large bags on the other hand, a great pressure arises, which forces the sludge through the bag.

The intention of this invention is to create a method and apparatus, which is a simple but effective way of dewatering and drying difficult sludges. The characteristic features of the method in accordance with the invention are presented in Patent Claim 1. The characteristic features of a corresponding apparatus are presented in Patent Claim 5. According to the invention the sludge's own ability to precipitate on top of a mass filter and form a stiff layer on the inner surface of a filter bag is exploited, when it is possible to use a filter bag equipped with a fairly open weave. By means of the invention it is possible to dry large amounts of sludge in the same rough-weave bag.

Other advantages and forms of application of the invention appear in connection with the example presented later. In what follows the invention is illustrated by reference to the accompanying Figures, which present a method and apparatus in accordance with the invention.
- Figure 1: shows the initial phase of the drying taking place in a mass filter.
- Figure 2: shows the drying of the sludge in the filter bag.
- Figure 3: shows the long-term further drying of sludge in storage.

The apparatus for drying a heavy-metal sludge includes a mass filter 1, a fabric 7 set on top of it and a lifting device 9 with cords 8. The fabric 7 is set in the mass filter 1 on top of the material 2 in such a way that it extends over the edges of the vessel 3. The cords 8 are either tied to the edges of the fabric or, as here, threaded under the fabric. The sludge 6 is now poured on top of the fabric 7, when the filtrate flows rapidly from it through the fabric 7 and mass filter 2 and exits through the exit connection 4 to the return line 5. The sludge 6 begins to form a precipate, which later acts as a filter, against the internal surface of the fabric 7. The fabric 7 has a fairly open weave, which is not, however, detrimental in the initial phase, because the particles that pass through it stop immediately at the surface of the mass material 2. Later the precipate formed on the surface prevents the exit of the free particles that are further in.

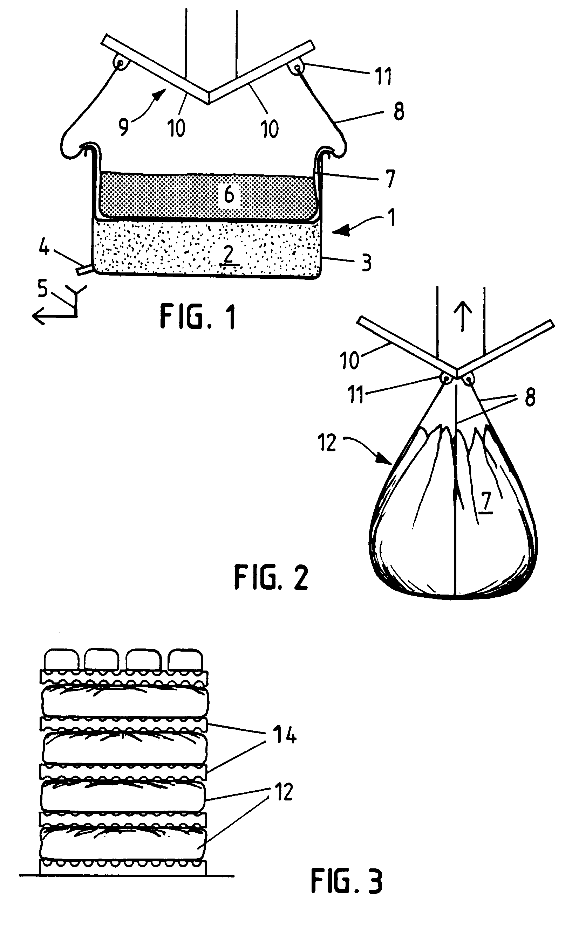

The lifting device 9 includes rails 10 and hanging devices 11 on them, to which the cords 8 are attached. There are two or even six V-shaped rails in the apparatus, when the fabric 7 can be raised by four or correspondingly six cords. In Figure 2 the bag 12 has been raised. The hangers 11 of the lifting device 9 travel to the centre due to the pulling effect at the same time contracting the sides of the fabric into a bag-like shape. At this stage some dirty filtrate still drips from the bag, for which reason it must be suspended over a collector vessel. Naturally the mass filter itself can act as such.

When the bag 12 has been hung for about two days, it is transferred to long-term store drying, in which the bags 12 are set on top of one another with intermediate platforms 14 that create air gaps, when in a few months the weight of the sacks in considerably reduced. The air-drying of the bag lasts most advantageously for 2 - 15 days.

The filter surface area of the mass filter or similar is most advantageously 1 - 2,5 m². The operational thickness of the sludge layer is between 10 - 40 cm. At such, the thickness and amount of the sludge layer can here be made much greater, but the precipitate collecting on top of the fabric finally becomes so thick that it prevents new sludge from drying. The various parameters have their own optimal combination in each drying event.

In one experiment, weak sludge with a heavy-metal content was dried, the solids content being 5%. In drying a mass filter equipped with a filter area of about 1,2 m² was used, on top of which 136 g/m² weight fabric (trade name TYPAR^{R} manufacturer DuPont) was spread. The water penetrability of the fabric was 100 l/m²s (De Voorst scale, i.e. a 100 mm water column). The original amount of the sludge was 250 kg.. The weight of the sludge dropped rapidly, being about 85 kg after one day, when the fabric was lifted from the edges to form a bag. After two days the weight of the bag was 75 kg. After this the bag was ready for store drying, in which bags can be set on one another in the manner shown in Figure 3. During a few months of store drying it can be assumed that the weight of the bag will still drop by 20 - 50 kg.. Thus the amount of waste to be taken to a waste treatment plant is reduced considerably from the original. It is advantageous if the stored bags are vibrated now and then. It apparently creates cracks in the mass that has already dried.

Especially with weak sludges a great amount can be poured onto the same fabric without any kind of automation. The above amount of 250 kg can be increased to even 1000 kg of 1% sludge.

The TYPAR fabric used above is unnecessarily dense. In this method it is possible to use the aforementioned TYPAR 68 fabric, which has a water penetrability of 260 l/m²s. A corresponding value is advantageously more than 200. In the same way large sack fabric, weight 135 g/m² can be used, which is the same material (polypropen) as TYPAR fabrics, but which is woven from broad (3 mm) strips. It has an opening size of 400 - 500 µm, whereas in TYPAR fabrics it is 340 µm at most (TYPAR 68). This kind of surface structure, with strips of 1,5 - 4 mm is obviously advantageous from the point of view of sedimentation.

Naturally the fabric placed on top of the mass filter can be originally already of a bag shape, even if the effective filter surface is in the initial phase only a small part of the entire surface area.

## Claims

1. A method for drying sludges, in which the sludge (6) is first of all poured into a mass filter (1), in which it is permitted to precipitate on top of a filter material (2) as a stiff sludge, which is collected for further drying, characterized in that before the sludge (6) is poured, a fabric (7), with a water penetrability on the De Voorst scale of more than 80 l/m²s, most advantageously more than 200 l/m²s, is spread on top of the filter material (2) and the precipitated sludge is lifted off the filter (1) by means of a bag (12) formed from this fabric (7), the precipitate formed on the inner surface of which acts later as a filter when the bag has been separated from the filter material (2).

2. A method in accordance with Patent Claim 1, characterized in that the bag (12) formed from the fabric (7) together with its contents is lifted to dry in free air for a period of 2 - 15 days, after which the bags (12) are set upon a base (13) equipped with air gaps.

3. A method in accordance with Patent Claim 2, characterized in that the filter surface area of the mass filter (2) or similar is 1 - 2,5 m².

4. A method in accordance with Patent Claim 2, characterized in that several bags (12) are set on top of one another together with intermediate bases (14) set between them, which also create air gaps between the bags (12) and conduct away free water from between the bags.

5. A method in accordance with Patent Claim 2, characterized in that the stored bags (12) are vibrated at regular intervals.

6. An apparatus for drying sludges for implementing the method in accordance with Patent Claim 1, which apparatus includes a mass filter (1), which consists of a vessel (3) open at the top, filter material (2) placed on the bottom of it, and an outlet connection (4) joined to the bottom of the vessel for removing the filtrate, characterized in that the apparatus includes a fabric (7) set on top of the filter material, which extends upwards from the edges in such a way that it can form a bag collecting the precipitated sludge, and that the water penetrability of the fabric (7) on the De Voorst scale is more than 80 l/m²s, most advantageously more than 200 l/m²s, and that the apparatus includes lifting devices (9) for lifting the fabric (7) and transforming it into a bag-like shape.

7. An apparatus in accordance with Patent Claim 6, characterized in that the lifting device (9) includes V-shaped rails (10), in which the lifting cords are attached to hangers (11) travelling on the rails, in which case lifting makes the fabric spread on top of the vessel contract into a bag-like form.

8. An apparatus in accordance with one of the above Patent Claims 6 - 7, characterized in that the fabric is formed from 1,5 - 4 mm wide strips.

## Patentansprüche

1. Verfahren zum Entwässern und Trocknen von Schlämmen, bei dem man den Schlamm (6) zunächst in ein Massefilter (1) schüttet und sich auf der Filtermasse (2) zu einem steifen Schlamm absetzen läßt, der dann zwecks Nachtrocknens entfernt wird, dadurch gekennzeichnet, daß vor dem Aufschütten des Schlamms (6) auf die Filtermasse (2) ein Gewebe (7) aufgelegt wird, dessen Wasserdurchlässigkeit nach der DeVoorst-Skala über 80 l/m²s, bevorzugt jedoch über 200 l/m²s beträgt, und der abgesetzte Schlamm in dem aus diesem Gewebe (7) gebildeten Beutel (12) von dem Filter (1) abgehoben wird, wobei der eingedickte Schlamm, der sich an der Gewebebeutel-Innenseite abgelagert hat, später, wenn der Beutel von der Filtermasse (2) abgehoben ist, selbst als Filter dient.

2. Verfahren nach Anspruch 1, dadurch gekennzeichnet, daß der aus dem Gewebe (7) gebildete Beutel (12) einschließlich seines Inhalts für 2 bis 15 Tage aufgehängt wird, um an der freien Luft zu trocknen, wonach dann die Beutel (12) auf einen Untersatz (13) mit Luftspalt gesetzt werden.

3. Verfahren nach Anspruch 2, dadurch gekennzeichnet, daß die Fläche des Massefilters (1) o. dgl. 1 bis 2,5 m² beträgt.

4. Verfahren nach Anspruch 2, dadurch gekennzeichnet, daß mehrere Beutel (12) mit je einem Zwischenboden (14) übereinander gestapelt werden, wobei diese Zwischenböden für einen Luftspalt auch zwischen den Beuteln (12) und Ableitung des freien Wassers zwischen den Beuteln sorgen.

5. Verfahren nach Anspruch 2, dadurch gekennzeichnet, daß die eingelagerten Beutel (12) in bestimmten Zeitabständen gerüttelt werden.

6. Zur Durchführung des Verfahrens nach Anspruch 1 dienende Schlammentwässerungs- und -trocknungsanlage, die ein Massefilter (1) mit einem oben offenen Behälter (3), einer Filtermasseschicht (2) am Boden und einem bodenseitigen Filtratabfluß (4) umfaßt, dadurch gekennzeichnet, daß diese Anlage ein auf die Filtermasse (2) aufgelegtes Gewebe (7) hat, das sich längs der Filterseitenwände so nach oben erstreckt, daß es zu einem eingedickten Schlamm sammelnden Beutel gerafft werden kann, und daß die Wasserdurchlässigkeit des Gewebes (7) nach der DeVoorst-Skala über 80 l/m²s, bevorzugt über 200 l/m²s beträgt und die Anlage Hebevorrichtungen (9) zum Anheben und Raffen des Gewebes (7) in Beutelform hat.

7. Anlage nach Anspruch 6, dadurch gekennzeichnet, daß die Hebevorrichtung (9) V-förmige Schienen (10) mit an ihnen laufenden Aufhängeeinrichtungen (11) umfaßt, wobei an letzteren Hebeseile befestigt sind, die beim Anheben das auf die Filtermasse aufgelegte Gewebe in Beutelform raffen.

8. Anlage nach Anspruch 6 oder 7, dadurch gekennzeichnet, daß das Gewebe aus 1,5 bis 4 mm breiten Streifen besteht.

## Revendications

1. Procédé de séchage des boues industrielles où la boue (6) est déversée au début sur un filtre de masse (1), où on la laisse s'épaissir sur un matériau filtrant (2), et qui est recueillie pour séchage ultérieur, caractérisé par le fait que, avant de déverser la boue (6), on étend sur le matériau filtrant (2) un tissu (7), dont le degré de perméabilité est supérieur à 80 l/m²s sur l'échelle de DeVoorst, la valeur idéale se situant au-dessus de 200 l/m²s, et que la boue épaissie est retirée du filtre (1) en étant prise dans le sac (12) formé par le tissu (7), le dépôt formé sur la surface dudit sac faisant ultérieurement office de filtre une fois que le sac n'est plus en contact avec le matériau filtrant (2).

2. Procédé conforme à la revendication 1, caractérisé par le fait que le sac (12) formé par le tissu (7) est levé avec son contenu pour sécher à l'air libre de 2 à 15 jours, après quoi le sac (12) est déposé sur un support intercalaire (13) dans lequel il y a des passages pour l'air.

3. Procédé conforme à la revendication 2, caractérisé par le fait que la surface filtrante du filtre de masse (1) ou de son équivalent est de 1 à 2,5 m².

4. Procédé conforme à la revendication 2, caractérisé par le fait que plusieurs sacs (12) sont empilés les uns sur les autres, avec intercalation entre les sacs d'un support intermédiaire (14), qui assure une circulation de l'air entre les sacs (12) et permet d'évacuer l'eau libre d'entre les sacs.

5. Procédé conforme à la revendication 2, caractérisé par le fait que les sacs stockés sont soumis à des vibrations à intervalles réguliers.

6. Dispositif destiné à mettre en oeuvre le procédé conforme à la revendication 1 pour le séchage des boues, et qui comporte un filtre de masse (1), formé d'un récipient ouvert sur le haut (3), d'un matériau filtrant (2) déposé sur le fond de celui-ci, ainsi que d'un conduit d'évacuation fixé à la base pour l'évacuation du filtrat, caractérisé par le fait qu'il est équipé d'un tissu (7) étendu par-dessus le matériau filtrant (2), et qui dépasse les bords du récipient de telle sorte qu'il peut former un sac contenant la boue épaissie, que le degré de perméabilité du tissu est supérieur à 80 l/m²s sur l'échelle de DeVoorst, la valeur idéale se situant au-dessus de 200 l/m²s, et qu'il comprend un dispositif de levage (9) permettant de lever le tissu (7) pour lui donner la forme d'un sac.

7. Dispositif conforme à la revendication 6, caractérisé par le fait que le dispositif de levage (9) comporte des rails en V (10), où les filins de levage sont fixés à des fixations (11) se déplaçant dans les rails, le levage ayant pour effet de serrer le tissu étendu sur le récipient en lui donnant la forme d'un sac.

8. Dispositif conforme à l'une des revendications 6 ou 7 ci-dessus, caractérisé par le fait que le tissu est tissé de fibres plates de 1,5 - 4 mm de largeur.
